# EUROPÄISCHE PATENTANMELDUNG

(11) **EP 4 843 880 A1**
(43) Veröffentlichungstag der Anmeldung: **25.11.2026**
(21) Anmeldenummer: 26178165.2
(22) Anmeldetag: 12.05.2026
(51) Int. Cl.: B62M 6/55, B62M 11/14

(54) **ANTRIEBSANORDNUNG FÜR EIN ZUMINDEST TEILWEISE MIT MUSKELKRAFT ANTREIBBARES FAHRZEUG**

(30) Priorität: 21.05.2025 DE 102025119716
(71) Anmelder: ZF Friedrichshafen AG, 88046 Friedrichshafen (DE)
(72) Erfinder: Riedisser, Thomas, 88138 Sigmarszell (DE); Seidel, Peter, 88094 Oberteuringen (DE); Doepfert, Hagen, 88131 Lindau (DE); Margraf, Christoph, 88677 Markdorf (DE); Scholz, Markus, 88045 Friedrichshafen (DE)
(74) Vertreter: ZF Friedrichshafen AG

(57) **Zusammenfassung**

Ein Getriebe (10) stellt ein Übersetzungsverhältnis zwischen einem Eingangselement (11) und einem Ausgangselement (12) des Getriebes (10) bereit. Ein Abtriebselement (40) ist über einen Freilauf (20) zum Ausgeben von zumindest einem Teil eines Abtriebsmoments mechanisch mit dem Ausgangselement (12) wirkverbindbar. Der Freilauf (20) weist mindestens einen schwenkbaren Klemmkörper (21) mit einer Klemmfläche (22) auf, deren Krümmung an eine Krümmung einer Innenumfangsfläche (24) eines Außenrings (26) des Freilaufs (20) angepasst ist. Die Klemmfläche (22) beschränkt ein Schwenken des Klemmkörpers (21) auf eine Sperrstellung, in der die Klemmfläche (22) entlang der Innenumfangsfläche (24) ausgerichtet ist. Der Klemmkörper (21) ist zum Übertragen eines Sperrmoments ausgestaltet, wenn der Klemmkörper (21) in die Sperrstellung geschwenkt ist. Der Klemmkörper (21) ist zum Durchrutschen ausgestaltet, wenn das zu übertragende Abtriebsmoment größer als das Sperrmoment ist.

## Beschreibung

### Technisches Gebiet

Die vorliegende Erfindung bezieht sich auf eine Antriebsanordnung für ein zumindest teilweise mit Muskelkraft antreibbares Fahrzeug und auf ein Fahrzeug mit einer Antriebsanordnung.

### Stand der Technik

Antriebsanordnungen für Fahrräder sind bekannt. Mit der zunehmenden Komplexität dieser Antriebsanordnungen und der zunehmenden Anzahl an Komponenten und Bauteilen, die in den Antriebsanordnungen verbaut werden, nehmen auch die Kosten und der Herstellungsaufwand für solche Antriebsanordnungen zu. Allein aus ökologischer Hinsicht ist es wünschenswert, dass eine solche Antriebsanordnung eine lange Lebensdauer aufweist.

### Darstellung der Erfindung

Es ist eine Aufgabe der vorliegenden Erfindung, eine verbesserte Antriebsanordnung bereitzustellen, die eine lange Lebensdauer aufweist.

Die Aufgabe wird von einer Antriebsanordnung gelöst, die die Merkmale des Anspruchs 1 aufweist. Vorteilhafte Weiterbildungen sind Gegenstand der abhängigen Ansprüche.

In einem ersten Aspekt ist eine Antriebsanordnung für ein zumindest teilweise mit Muskelkraft antreibbares Fahrzeug vorgesehen. Die Antriebsanordnung weist ein Getriebe, ein Abtriebselement und einen Freilauf auf. Das Getriebe stellt ein Übersetzungsverhältnis zwischen einem Eingangselement und einem Ausgangselement des Getriebes bereit. Das Abtriebselement ist über den Freilauf zum Ausgeben von zumindest einem Teil eines Abtriebsmoments mechanisch mit dem Ausgangselement wirkverbindbar. Das Getriebe kann weitere Ausgangselemente, beispielsweise ein zweites Ausgangselement, aufweisen. Das zweite Ausgangselement kann mechanisch mit dem Abtriebselement wirkverbunden sein, beispielsweise drehfest verbunden sein Der Freilauf weist mindestens einen schwenkbaren Klemmkörper mit einer Klemmfläche auf, deren Krümmung an eine Krümmung einer Innenumfangsfläche eines Außenrings des Freilaufs angepasst oder angenähert ist. Die Klemmfläche beschränkt ein Schwenken des Klemmkörpers auf eine Sperrstellung. In der Sperrstellung ist die Klemmfläche entlang der Innenumfangsfläche ausgerichtet. Der Klemmkörper ist zum Übertragen eines Sperrmoments ausgestaltet, wenn der Klemmkörper in die Sperrstellung geschwenkt ist. Der Klemmkörper ist zum Durchrutschen ausgestaltet, wenn das zu übertragende Abtriebsmoment größer als das Sperrmoment ist. Der Klemmkörper kann zum Durchrutschen an der Klemmfläche bezogen auf die Innenumfangsfläche ausgestaltet sein.

Das Fahrzeug kann als Fahrrad, E-Bike oder Pedelec ausgestaltet sein. Die Antriebsanordnung kann als Tretlagerantriebsanordnung ausgestaltet sein. Das Ausgangselement kann ein Zahnrad, ein Kettenrad oder eine Riemenscheibe aufweisen. Das Eingangselement kann als Tretkurbelwelle ausgebildet sein. Zumindest eine Tretkurbel kann an einem Ende in einer Axialrichtung des Eingangselements drehfest mit dem Eingangselement verbunden sein. Das Eingangselement kann eine Drehachse aufweisen, die um das Eingangselement drehbar ist. Die Drehachse kann in der Axialrichtung ausgerichtet sein. Eine Radialrichtung kann im Wesentlichen senkrecht zu der Axialrichtung ausgerichtet sein. Eine Umfangsrichtung kann um die Drehachse umlaufend ausgerichtet sein. Ein Pedal kann an einem Ende in der Radialrichtung der Tretkurbel befestigt sein. Das Eingangselement kann koaxial zu zumindest einem von dem Ausgangselement und dem Abtriebselement angeordnet sein. Das Eingangselement kann sich in der Axialrichtung durch zumindest eines von dem Ausgangselement und dem Abtriebselement hindurch erstrecken.

Die Antriebskraft kann in Form einer Tretkraft von einem Fahrer an der Tretkurbel, beispielsweise an dem Pedal, aufgebracht werden. Die Antriebskraft kann über das Eingangselement in das Getriebe einbringbar sein. Die Antriebskraft kann an dem Eingangselement in Form eines Drehmoments und/oder einer Drehzahl vorliegen. Die Antriebskraft kann über das Getriebe umgewandelt werden, beispielsweise kann das Drehmoment erhöht oder reduziert werden. Die umgewandelte Antriebskraft kann an dem Abtriebselement in Form eines Abtriebsmoments ausgebbar sein.

Das Getriebe kann ein oder mehrere Übersetzungsverhältnisse zwischen dem Eingangselement und dem Ausgangselement bereitstellen. Die Übersetzungsverhältnisse können schaltbar, beispielsweise über zumindest ein Schaltelement, sein. Das Getriebe kann als Schaltgetriebe ausgestaltet sein. Das Getriebe kann eine Mehrzahl an Radsätzen, beispielsweise Planetenradsätzen, zum Bereitstellen der Übersetzungsverhältnisse aufweisen. Die Planetenradsätze können Komponenten des Getriebes bilden. Das Getriebe kann weitere Komponenten, beispielsweise Schaltelemente, Freiläufe und dergleichen, aufweisen.

Sind zwei Elemente mechanisch wirkverbunden, so sind diese unmittelbar oder mittelbar derart miteinander gekoppelt, dass eine Bewegung des einen Elements eine Reaktion des anderen Elements bewirkt. Beispielsweise kann eine mechanische Wirkverbindung durch eine formschlüssige oder reibschlüssige Verbindung bereitgestellt werden. Die mechanische Wirkverbindung kann einem Kämmen von korrespondierenden Verzahnungen der zwei Elemente entsprechen. Zwischen den Elementen können dabei weitere Elemente, beispielsweise eine oder mehrere Stirnradstufen, vorgesehen sein. Unter einer permanent drehfesten Verbindung zweier Elemente wird hingegen eine Verbindung verstanden, bei welcher die beiden Elemente zu allen bestimmungsgemäßen Zuständen des Getriebes starr miteinander gekoppelt sind. Die Elemente können dabei als drehfest miteinander verbundene Einzelkomponenten oder auch einstückig vorliegen. Über ein Schaltelement, beispielsweise einen Freilauf, eine Kupplung oder Bremse, kann hingegen eine drehfeste Verbindung zwischen zwei Elementen selektiv hergestellt oder aufgelöst werden. Der Freilauf kann so ausgestaltet sein, dass er eine drehfeste Verbindung nur in einer Sperrdrehrichtung herstellt und in einer der Sperrdrehrichtung entgegengesetzten Freilaufdrehrichtung ein freies Drehen der Elemente zueinander ermöglicht. Insofern kann der Freilauf einen Sperrzustand und einen Freilaufzustand aufweisen.

Das Abtriebsmoment kann zum Antreiben beziehungsweise Fortbewegen des Fahrzeugs eingerichtet sein. Das Abtriebselement kann zum Ausgeben des Abtriebsmoments über ein Abtriebsgetriebe, beispielsweise einen Ketten- oder Riementrieb, an ein antreibbares Traktionselement, beispielsweise Hinterrad, eingerichtet sein.

Das Ausgangselement des Getriebes kann über den Freilauf in der Sperrdrehrichtung drehfest mit dem Abtriebselement der Antriebsanordnung verbindbar eingerichtet sein. Das Ausgangselement des Getriebes kann über den Freilauf in der Freilaufdrehrichtung frei drehbar zu dem Abtriebselement der Antriebsanordnung eingerichtet sein.

Der Freilauf kann als Freilaufkupplung oder Überhohlkupplung ausgestaltet sein. Der Freilauf kann eine Mehrzahl von Klemmkörpern aufweisen. Die Klemmkörper können in der Umfangsrichtung verteilt, beispielsweise gleichmäßig verteilt oder in Gruppen verteilt, angeordnet sein. Eine Gruppe von Klemmkörpern, beispielweise drei Klemmkörper, können in der Umfangsrichtung einen geringen, beispielsweise gleichen, Abstand zueinander aufweisen. Mehrere dieser Gruppen können in der Umfangsrichtung verteilt, beispielsweise gleichmäßig verteilt, angeordnet sein. Der Freilauf kann einen Innenring und einen Außenring aufweisen. Der Klemmkörper kann in der Radialrichtung zwischen dem Innenring und dem Außenring des Freilaufs angeordnet sein.

Der Klemmkörper kann eine Sperrstellung und eine Freilaufstellung aufweisen. Der Klemmkörper kann von der Freilaufstellung zu der Sperrstellung schwenkbar, beispielsweise um eine Schwenkachse, eingerichtet sein. Die Schwenkachse kann achsparallel zu einer Drehachse des Freilaufs, beispielsweise der Drehachse des Abtriebselements, ausgerichtet sein. Der Freilauf kann den Sperrzustand bereitstellen, wenn der Klemmkörper in der Sperrstellung ist. Der Freilauf kann den Freilaufzustand bereitstellen, wenn der Klemmkörper in der Freilaufstellung ist.

Der Außenring des Freilaufs kann eine Innenumfangsfläche aufweisen. Die Innenumfangsfläche kann eine Lauffläche, beispielsweise für einen Wälzkörper, bilden. Der Innenring des Freilaufs kann eine Außenumfangsfläche aufweisen. Die Außenumfangsfläche kann eine Lauffläche, beispielsweise für den Wälzkörper, bilden. In der Sperrstellung kann die Klemmfläche des Klemmkörpers eine hohe Druckkraft oder Normalkraft auf die Innenumfangsfläche, beispielsweise die Lauffläche, ausüben. Die hohe Druckkraft kann eine hohe Reibkraft bilden. Die hohe Reibkraft kann das über den Freilauf übertragbare Sperrmoment bilden. Das Sperrmoment kann ein reibungsbasiertes Moment sein. Das Sperrmoment kann zwischen dem Innenring und dem Außenring übertragbar sein. In der Freilaufstellung kann die Klemmfläche des Klemmkörpers oder eine andere Fläche, beispielsweise eine Freilauffläche, des Klemmkörpers eine geringe Druckkraft oder Normalkraft auf die Innenumfangsfläche, beispielsweise die Lauffläche, ausüben, die niedriger sein kann als die hohe Druckkraft. Die geringe Druckkraft kann so gering sein, dass der Innenring und der Außenring im Wesentlichen frei zueinander drehbar sind, beispielsweise in der Freilaufdrehrichtung. Das Sperrmoment des Freilaufs kann in Zusammenhang mit einer Anzahl an Klemmkörpern stehen. Das Sperrmoment kann durch ein Reduzieren der Anzahl an Klemmkörper reduzierbar sein. Das Sperrmoment kann durch ein Erhöhen der Anzahl an Klemmkörper erhöhbar sein.

In der Sperrstellung kann die Klemmfläche entlang der Innenumfangsfläche ausgerichtet sein. In der Sperrstellung kann die Klemmfläche in Berührung mit der Innenumfangsfläche sein. In der Freilaufstellung kann die Klemmfläche verschwenkt, beispielsweise in der Radialrichtung nach innen verschwenkt, zu der Innenumfangsfläche sein. In der Freilaufstellung kann die Klemmfläche gelöst oder entfernt von der Innenumfangsfläche sein.

Der Klemmkörper kann eine Anschlagfläche aufweisen. Die Klemmfläche kann die Anschlagfläche bilden. Die Anschlagfläche kann in der Umfangsrichtung versetzt zu einem Berührbereich des Klemmkörpers mit der Außenumfangsfläche des Innenrings sein. Die Anschlagfläche kann das Schwenken des Klemmkörpers von der Freilaufstellung auf die Sperrstellung beschränken. Dadurch kann ein Umklappen des Klemmkörpers verhindert werden. Außerdem kann dadurch das übertragbare Drehmoment des Freilaufs auf das Sperrmoment beschränkt werden. Übersteigt ein Drehmoment zwischen dem Innenring und dem Außenring das Sperrmoment, kann dies zu einem Durchrutschen des Außenrings bezogen auf den Klemmkörper beziehungsweise den Innenring führen.

Dadurch kann ein Überlastschutz für Komponenten des Getriebes bei Drehmomentstößen, beispielsweise bei dynamischen Sprüngen auf die Pedale, bei einem dynamischen Rennstart über die Pedale oder dergleichen bereitgestellt werden. Dies erhöht die Robustheit der Antriebsanordnung und verringert die Gefahr des Bauteilversagens einer Komponente des Getriebes. Dementsprechend kompakt können die Komponenten des Getriebes ausgestaltet sein. Dadurch kann eine Antriebsanordnung mit geringen Kosten, einem geringen Bauraum und einem geringen Gewicht bereitgestellt werden.

Der Freilauf kann ein Vorspannelement, beispielsweise ein Federelement, aufweisen. Das Vorspannelement kann den Freilaufkörper zu der Sperrposition hin vorspannen. Der Freilaufkörper kann einen Vorspannabschnitt aufweisen. Das Vorspannelement kann an dem Vorspannabschnitt, beispielsweise an einer Vorspannfläche, anliegen. Ein Berührbereich zwischen dem Vorspannabschnitt und dem Vorspannelement kann in der Umfangsrichtung versetzt zu dem Berührbereich des Klemmkörpers mit der Außenumfangsfläche des Innenrings sein. Das Vorspannelement kann ein Aufstellmoment an dem Freilaufkörper erzeugen, das den Freilaufkörper zu der Sperrposition hin vorspannt. Dadurch kann eine Vorspannkraft, beispielsweise Druckkraft oder Normalkraft, der Klemmfläche oder der Freilauffläche des Klemmkörpers auf die Innenumfangsfläche, beispielsweise die Lauffläche, ausgeübt werden, die gering ist, beispielsweise wie oben beschrieben. Das Vorspannelement kann ringförmig gestaltet sein. Das Vorspannelement kann als Wurmfeder ausgestaltet sein. Das Vorspannelement kann sich in der Umfangsrichtung zwischen dem Innenring und dem Außenring umlaufend erstrecken.

Der Freilauf kann einen Käfig aufweisen. Der Käfig kann zum Positionieren der Freilaufkörper und/oder der Wälzkörper in der Umfangsrichtung und/oder der Axialrichtung ausgestaltet sein. Der Käfig kann zum Positionieren des Vorspannelements ausgestaltet sein.

In einer Ausführungsform der Antriebsanordnung kann der Klemmkörper zum Beschränken einer Aufstellweite in der Radialrichtung zwischen dem Außenring und dem Innenring durch die Klemmfläche ausgestaltet sein, wenn der Klemmkörper in die Sperrstellung geschwenkt ist. Die Aufstellweite des Klemmkörpers kann in der Sperrstellung größer als eine Aufstellweite des Klemmkörpers in der Freilaufstellung sein.

Der Klemmkörper kann eine Außenkontur aufweisen, die abgesehen von der Klemmfläche, rundlich, elliptisch, eiförmig oder dergleichen ausgestaltet ist. Die Aufstellweite kann sich aus einer Erstreckung des Klemmkörpers in der Radialrichtung ergeben. Die Aufstellweite kann für unterschiedliche Stellungen des Klemmkörpers, beispielsweise der Sperrstellung und der Freilaufstellung, unterschiedlich sein. Je weiter der Klemmkörper von der Freilaufstellung zu der Sperrstellung geschwenkt wird, desto größer kann die Aufstellweite werden. Dabei kann die Aufstellweite kontinuierlich zunehmen. Die Aufstellweite kann von einem Verschwenken des Klemmkörpers, beispielsweise um die Schwenkachse, abhängig sein. Die Aufstellweite kann beschränkbar ausgestaltet sein, beispielsweise über die Anschlagfläche.

In einer Ausführungsform der Antriebsanordnung kann die Krümmung der Klemmfläche für einen Flächenkontakt der Klemmfläche mit der Innenumfangsfläche in der Sperrstellung des Klemmkörpers angepasst sein. Der Flächenkontakt kann entlang der gesamten Klemmfläche vorgesehen sein. Die Krümmung der Klemmfläche kann im Wesentlichen gleich oder etwas größer als die Krümmung der Innenumfangsfläche des Außenrings sein. Über den Flächenkontakt kann ein Verschleiß der Klemmfläche und der Innenumfangsfläche reduziert sein. Dadurch kann eine Antriebsanordnung mit einer hohen Lebensdauer bereitgestellt werden.

In einer Ausführungsform der Antriebsanordnung kann zumindest einer von dem Außenring und dem Innenring so ausgestaltet sein, dass er eine an das Sperrmoment angepasste radiale Elastizität aufweist. Sowohl der Außenring als auch der Innenring kann eine an das Sperrmoment angepasste radiale Elastizität aufweisen. Die radiale Elastizität kann über eine gezielte Schwächung der Steifigkeit des Außenrings beziehungsweise Innenrings in der Radialrichtung eingestellt sein. Die radiale Elastizität kann über eine Dicke des Außenrings beziehungsweise des Innenrings in der Radialrichtung eingestellt sein. Die Dicke kann so bemessen sein, dass die Druckkraft zum Bereitstellen des Sperrmoments ein Deformieren, beispielsweise Aufweiten beziehungsweise Zusammendrücken, des Außenrings beziehungsweise des Innenrings bewirkt.

Die radiale Elastizität kann für eine zylindrisch homogene Deformation, beispielsweise das Aufweiten oder das Zusammendrücken, eingerichtet sein. Dadurch kann die Innenumfangsfläche und oder die Außenumfangsfläche oder eine davon gebildete Lauffläche während der Deformation eine zylindrische Form beibehalten. Diese eingerichtete radiale Elastizität ist kombinierbar mit dem Freilauf, der eine Lagerfunktion aufweist, wie später beschrieben wird. Über die radiale Elastizität kann das Sperrmoment gezielt auf einen bestimmten Wert einstellbar sein. Das Sperrmoment kann auf einen Wert eingestellt sein, der niedriger ist als ein Bruchlastmoment der Komponenten des Getriebes, beispielsweise das geringste Bruchlastmoment einer der Komponenten.

In einer Ausführungsform der Antriebsanordnung kann der Freilauf mindestens einen Wälzkörper mit einer Lagerfunktion aufweisen. Über den zumindest einen Wälzkörper kann der Freilauf eine Lagereinrichtung bilden. Eine Anzahl an Wälzkörpern kann in der Umfangsrichtung verteilt, beispielsweise gleichmäßig verteilt, angeordnet sein. Der Wälzkörper kann in der Radialrichtung zwischen dem Außenring und dem Innenring angeordnet sein. Der Wälzkörper kann in Berührung mit der Lauffläche des Außenrings und des Innenrings sein. In der Umfangsrichtung können drei Klemmkörper, beispielsweise als Gruppe von Klemmkörpern, und ein Wälzkörper wechselweise angeordnet sein. Der Freilauf kann zumindest fünf Wälzkörper aufweisen. Die Lagereinrichtung kann eine Radiallagerung des Innenrings relativ zu dem Außenring bereitstellen. Der Wälzkörper kann als Zylinder oder Kugel ausgestaltet sein. Dadurch kann eine toleranzbehaftete Schwankung des Sperrmoments verringert werden.

In einer Ausführungsform der Antriebsanordnung kann der Innenring über eine Welle-Nabe-Verbindung drehfest mit dem Abtriebselement verbunden sein, beispielsweise an einer Innenumfangsfläche des Innenrings. Die Welle-Nabe-Verbindung kann als Keilwellen-Verbindung, Zahnwellen-Verbindung, Kerbverzahnung oder dergleichen ausgestaltet sein.

In einer Ausführungsform der Antriebsanordnung kann das Getriebe mindestens einen Planetenradsatz aufweisen. Das Ausgangselement kann als Hohlrad, beispielsweise des Planetenradsatzes, ausgestaltet sein, das einstückig mit dem Außenring ausgebildet sein kann. Das zweite Ausgangselement kann als Sonnenrad, beispielsweise des Planetenradsatzes, ausgebildet sein. Der Planetenradsatz kann das Sonnenrad, den Planetenträger, eine Anzahl an Planetenbolzen, eine Anzahl an Planetenrädern und das Hohlrad aufweisen. Die Planetenbolzen können an dem Planetenträger befestigt sein. Jeder der Planetenbolzen kann ein Planetenrad drehbar lagern. Zumindest eines der Planetenräder kann sowohl mit dem Sonnenrad als auch mit dem Hohlrad in Eingriff sein. Der Planetenradsatz kann als Plus-Planetenradsatz oder Minus-Planetenradsatz ausgestaltet sein. Das Sonnenrad kann eine Stirnradverzahnung aufweisen. Der Planetenradsatz kann über den Freilauf verblockt betreibbar sein. Dabei kann eine Differenzdrehzahl zwischen dem Hohlrad und dem Sonnenrad im Wesentlichen 0 sein. Dabei kann der größte Teil des Abtriebsmoments über das Hohlrad und somit über den in Sperrdrehrichtung verblockten Freilauf zum drehfest angebundenen Abtriebselement übertragbar sein. Ein kleiner Teil des Abtriebsmoments kann über das Sonnenrad auf das Abtriebselement übertragbar sein. Das zum Abtriebselement übertragbare Abtriebsmoment kann somit maßgeblich durch das übertragbare Drehmoment des Freilaufs bestimmt sein.

Das Eingangselement und das Ausgangselement können koaxial zueinander angeordnet sein. Das Ausgangselement kann in der Axialrichtung versetzt zu dem Außenring angeordnet sein. Das Ausgangselement kann in der Axialrichtung benachbart zu oder angrenzend an den Außenring angeordnet sein. Das Ausgangselement und der Außenring können von einem gemeinsamen Ausgangsringelement, beispielsweise einstückig, gebildet sein.

Das Getriebe kann als Schaltgetriebe ausgestaltet sein. Das Getriebe kann vier Planetenradsätze aufweisen. Zumindest einer oder alle der Planetenradsätze können als Minus-Planetenradsätze ausgestaltet sein. Das Getriebe kann eine Mehrzahl an Schaltelemente, beispielsweise vier Schaltelemente, aufweisen. Die Schaltelemente können als Bremsen ausgestaltet sein. Das Getriebe kann eine Anzahl an Freiläufen, beispielsweise vier Freiläufe, aufweisen. Das Getriebe kann eine Mehrzahl an Gängen, beispielsweise 13 oder 16 Gänge, aufweisen. Ein Gang kann in Zusammenhang mit einem Übersetzungsverhältnis zwischen dem Eingangselement und dem Ausgangselement sein.

In einer Ausführungsform der Antriebsanordnung kann die Antriebsanordnung ein Ölreservoir mit einem Ölvolumen aufweisen, das so ausgestaltet sein kann, dass zumindest ein Abschnitt des Freilaufs unterhalb einer Öloberfläche des Ölvolumens angeordnet ist. Das Getriebe kann das Öl aufweisen. Das Öl kann eine Schmiereigenschaft und/oder eine Kühleigenschaft aufweisen. Zumindest einer der Klemmkörper kann zumindest abschnittsweise unterhalb des Ölspiegels angeordnet sein. Der Innenring und der Außenring können abschnittsweise unterhalb des Ölspiegels angeordnet sein. Der Freilauf kann so angeordnet sein, dass eine Ölbenetzung des Freilaufs, beispielsweise auch im Betrieb des Fahrzeugs, gewährleistet ist. Dadurch kann ein homogener Beölungszustand des Freilaufs gewährleistet werden. Ein homogener Reibungszustand beispielsweise zwischen der Innenumfangsfläche des Außenrings und der Klemmfläche des Klemmkörpers, kann gewährleistet werden. Eine Schwankung des Sperrmoments kann reduziert werden. Dies erhöht die Reproduzierbarkeit der Überlastschutzfunktion des Freilaufs.

In einer Ausführungsform der Antriebsanordnung kann die Antriebsanordnung eine elektrische Antriebseinheit mit einem Reduktionsgetriebe aufweisen. Das Reduktionsgetriebe kann zum Ausgeben eines elektrischen Abtriebsmoments über einen zweiten Freilauf, beispielsweise in einer Sperrdrehrichtung, mechanisch mit dem Abtriebselement wirkverbindbar sein. Der zweite Freilauf kann zusätzlich zu dem zuvor beschriebenen Freilauf, beispielsweise ersten Freilauf, vorgesehen sein. Ein Ausgangselement des Reduktionsgetriebes und ein Außenring des zweiten Freilaufs können einstückig ausgebildet sein. Der zweite Freilauf kann in einer Axialrichtung benachbart zu dem oder angrenzend an den Freilauf angeordnet sein. Der Innenring und ein Innenring des zweiten Freilaufs können von einem gemeinsamen Innenring gebildet sein.

Die elektrische Antriebseinheit kann als Elektromotor, beispielsweise Synchronmaschine oder Asynchronmaschine, ausgestaltet sein. Die elektrische Antriebseinheit kann einen Stator und einen Rotor aufweisen. Die elektrische Antriebseinheit kann eine Antriebswelle aufweisen. Der Rotor kann die Antriebswelle ausbilden. Die Antriebswelle kann zum Eingeben einer elektrischen Antriebskraft in das Reduktionsgetriebe mechanisch mit einem Eingangselement des Reduktionsgetriebes verbunden sein, beispielsweise drehfest verbunden sein. Das Eingangselement und das Ausgangselement des Reduktionsgetriebes können achsparallel angeordnet sein. Die elektrische Antriebseinheit kann achsparallel zu dem Eingangselement des Getriebes angeordnet sein.

Der gemeinsame Innenring kann sich hülsenförmig in der Axialrichtung erstrecken. Der gemeinsame Innenring kann einen Anbindungsabschnitt zur drehfesten Verbindung mit dem Abtriebselement aufweisen. Der Anbindungsabschnitt kann für die Welle-Nabe-Verbindung ausgestaltet sein. Der gemeinsame Innenring kann einen Abstützabschnitt zum Positionieren des gemeinsamen Innenrings relativ zu dem Abtriebselement, beispielsweise in der Radialrichtung, aufweisen. Der Abstützabschnitt kann sich in der Radialrichtung scheibenförmig erstrecken, beispielsweise von dem gemeinsamen Innenring nach innen bis zu dem Abtriebselement. Ein Innenumfang des Abstützabschnitts kann an einem Außenumfang des Abtriebselements anliegen. Der Anbindungsabschnitt kann an einer ersten Seite des Innenrings angeordnet sein. Der Abstützabschnitt kann an einer der ersten Seite entgegengesetzten zweiten Seite des Innenrings angeordnet sein.

In einem zweiten Aspekt ist ein Fahrzeug mit einer Antriebsanordnung nach dem ersten Aspekt vorgesehen. Das Fahrzeug ist zumindest teilweise mit Muskelkraft antreibbar. Weitere Merkmale, Vorteile und Wirkungen für den zweiten Aspekt können einem der vorhergehenden Aspekte entnommen werden. Ferner bilden Merkmale, Vorteile und Wirkungen des zweiten Aspekts Merkmale, Vorteile und Wirkungen für die vorhergehenden Aspekte. Das Fahrzeug weist ein Traktionselement auf, das zum Fortbewegen des Fahrzeugs mechanisch mit dem Abtriebselement der Antriebsanordnung wirkverbunden ist.

Das Fahrzeug ist zumindest teilweise mit Muskelkraft antreibbar. Das Fahrzeug weist zumindest ein Traktionselement zum Fortbewegen des Fahrzeugs auf, das mechanisch mit dem Ausgangselement wirkverbunden ist. Das Traktionselement kann von einem Antriebsrad, beispielsweise einem antreibbaren Hinterrad, gebildet sein. Das Traktionselement kann über das Abtriebsgetriebe, beispielsweise ein Kettengetriebe, ein Kettentrieb, ein Riemengetriebe oder ein Riementrieb, mechanisch mit dem Ausgangselement wirkverbunden sein. Das Fahrzeug kann sonstige Einrichtungen, wie eine Lenkeinrichtung und eine Bremseinrichtung aufweisen.

### Kurze Beschreibung der Figuren

Figur 1a ist eine Prinzipdarstellung einer Ausführungsform eines Freilaufs für eine Antriebsanordnung eines zumindest teilweise mit Muskelkraft antreibbaren Fahrzeugs in einem Freilaufzustand.
Figur 1b ist eine Prinzipdarstellung des Freilaufs aus Figur 1a in einem Übergangszustand.
Figur 1c ist eine Prinzipdarstellung des Freilaufs aus Figur 1a in einem Sperrzustand.
Figur 2 ist eine Schnittansicht einer Prinzipdarstellung einer Ausführungsform der Antriebsanordnung.
Figur 3 ist eine Schnittansicht einer Prinzipdarstellung einer weiteren Ausführungsform der Antriebsanordnung.
Figur 4 ist ein Detail einer Schnittansicht einer Prinzipdarstellung einer weiteren Ausführungsform der Antriebsanordnung.
Figur 5 ist ein Detail einer Seitenansicht einer Prinzipdarstellung einer weiteren Ausführungsform der Antriebsanordnung.
Figur 6 ist ein Detail einer Schnittansicht einer Prinzipdarstellung einer weiteren Ausführungsform der Antriebsanordnung.
Figur 7 ist eine Seitenansicht einer Prinzipdarstellung des zumindest teilweise mit Muskelkraft antreibbaren Fahrzeugs.

### Detaillierte Beschreibung von Ausführungsformen

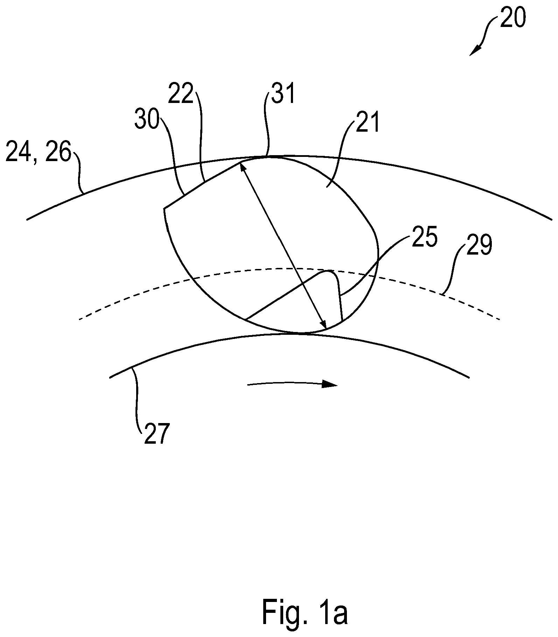

Figur 1a ist eine Prinzipdarstellung einer Ausführungsform eines Freilaufs 20 für eine Antriebsanordnung eines zumindest teilweise mit Muskelkraft antreibbaren Fahrzeugs in einem Freilaufzustand. Der Freilauf 20 weist einen Innenring 27, einen Außenring 26 und eine Anzahl an Klemmkörpern 21 auf. Die Klemmkörper 21 sind in einer Radialrichtung zwischen dem Innenring 27 und dem Außenring 26 angeordnet. Der Klemmkörper 21 befindet sich in einer Freilaufstellung. Der Klemmkörper 21 ist zwischen der Freilaufstellung und einer Sperrstellung schwenkbar.

Der Klemmkörper 21 weist eine Klemmfläche 22 auf, deren Krümmung an eine Krümmung einer Innenumfangsfläche 24 des Außenrings 26 für einen Flächenkontakt angepasst ist. Der Klemmkörper 21 weist eine Freilauffläche 31 auf, die in Kontakt mit der Innenumfangsfläche 24 ist. In der Freilaufstellung ist die Klemmfläche 22 verschwenkt zu der Innenumfangsfläche 24 und gelöst von ihr angeordnet. In der Freilaufstellung ist der Innenring 27 in einer Freilaufdrehrichtung relativ zu dem Außenring 26 frei drehbar.

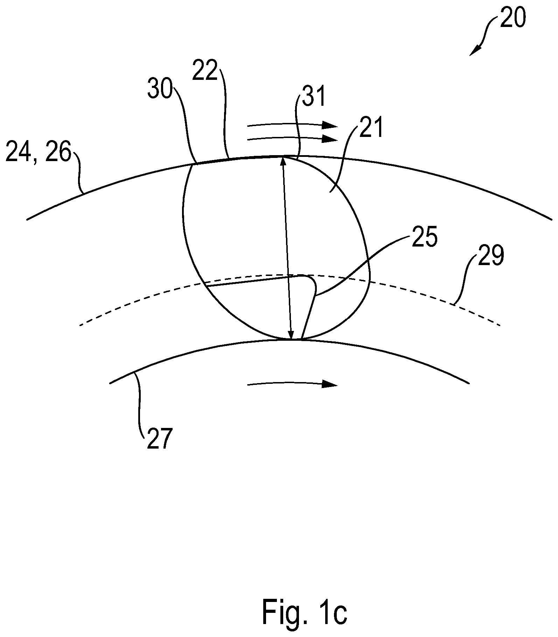

Der Freilauf 20 weist ein als Ringfeder ausgestaltetes Vorspannelement 29 auf, das sich in der Radialrichtung zwischen dem Innenring 27 und dem Außenring 26 in der Umfangsrichtung erstreckt. Das Vorspannelement 29 liegt an einem Vorspannabschnitt 25 des Klemmkörpers 21 an und drückt diesen in der Radialrichtung nach innen. Ein Berührbereich zwischen dem Vorspannabschnitt 25 und dem Vorspannelement 29 ist in der Umfangsrichtung versetzt zu einem Berührbereich zwischen dem Klemmkörper 21 und einer Außenumfangsfläche des Innenrings 27 angeordnet. Dadurch wird ein Aufstellmoment erzeugt, das den Klemmkörper 21 zu einer in Figur 1c gezeigten Sperrstellung hin vorspannt.

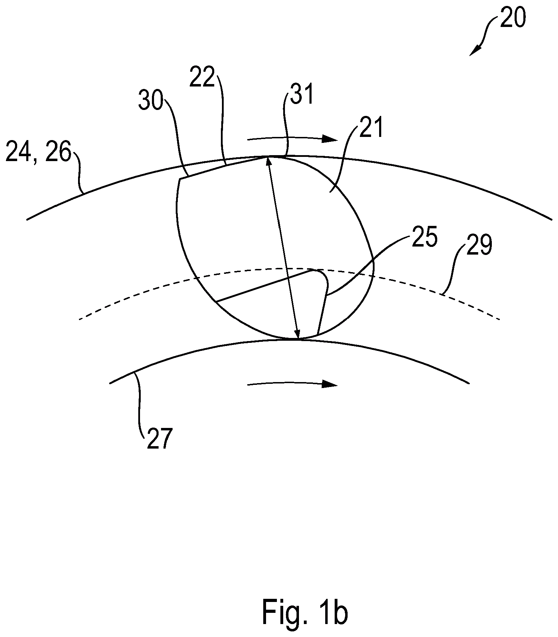

Figur 1b ist eine Prinzipdarstellung des Freilaufs 20 aus Figur 1a in einem Übergangszustand. Der Außenring 26 beginnt sich in einer Sperrdrehrichtung relativ zu dem Innenring 27 zu drehen. Dadurch wird über einen Berührbereich zwischen der Freilauffläche 31 des Klemmkörpers 21 und der Innenumfangsfläche 24 des Außenrings 26 das Aufstellmoment vergrößert, so dass der Klemmkörper 21 von der Freilaufstellung zu der Sperrstellung geschwenkt wird.

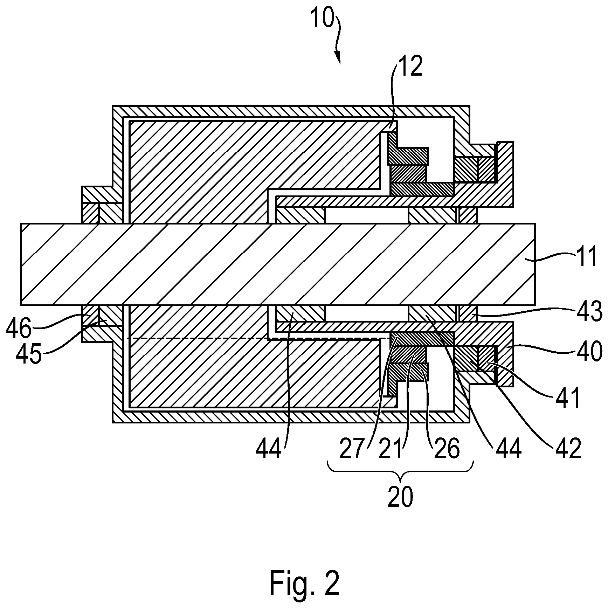

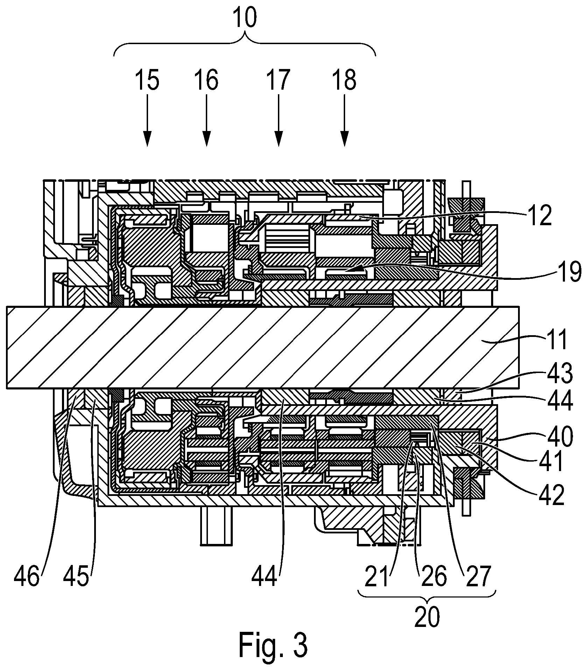

Figur 1c ist eine Prinzipdarstellung des Freilaufs 20 aus Figur 1a in einem Sperrzustand. Der Außenring 26 hat sich so weit in der Sperrdrehrichtung relativ zu dem Innenring 27 gedreht, dass der Klemmkörper 21 in die Sperrstellung geschwenkt ist. Die Klemmfläche 22 ist entlang der Innenumfangsfläche 24 ausgerichtet und ist in Flächenkontakt mit der Innenumfangsfläche 24. Der Klemmkörper 21 in der Sperrstellung weist eine Aufstellweite auf, die sich in der Radialrichtung zwischen der Außenumfangsfläche des Innenrings 27 und der Innenumfangsfläche 24 des Außenrings 26 erstreckt. Die Klemmfläche 22 weist eine Anschlagfläche 30 auf, die bezogen auf den Berührbereich des Klemmkörpers 21 mit dem Innenring 27 in der Umfangsrichtung zu der linken Seite in Figur 1c versetzt angeordnet ist. Die Anschlagfläche 30 beschränkt ein Schwenken des Klemmkörpers 21 von der Freilaufstellung auf die Sperrstellung. Der Klemmkörper 21 kann nicht über die Sperrstellung hinaus geschwenkt werden. Dadurch stellt der Freilauf 20 einen Überlastschutz für Komponenten eines mit Bezug auf Figuren 2 und 3 beschriebenen Getriebes 10 bereit. Dies verlängert die Lebensdauer der Antriebsanordnung.

In der Sperrstellung übt die Klemmfläche 22 eine Normalkraft auf die Innenumfangsfläche 24 auf. Darüber wird ein Reibmoment erzeugt, das ein Sperrmoment bildet. Dadurch ist der Klemmkörper 21 zum Übertragen eines reibungsbasierten Sperrmoments ausgestaltet, wenn der Klemmkörper 21 in die Sperrstellung geschwenkt ist. Übersteigt das zu übertragende Abtriebsmoment das Sperrmoment, ist der Klemmkörper 21 über die Anschlagfläche 30 zum Durchrutschen ausgestaltet. Das über den Freilauf 20 übertragbare Abtriebsmoment ist auf das Sperrmoment beschränkt.

Figur 2 ist eine Schnittansicht einer Prinzipdarstellung einer Ausführungsform der Antriebsanordnung. Die Antriebsanordnung weist ein Getriebe 10 auf, das ein schaltbares Übersetzungsverhältnis zwischen einem Eingangselement 11, vorliegend einer Tretkurbelwelle, und einem Ausgangselement 12 des Getriebes 10 bereitstellt. Das Eingangselement 11 ist koaxial zu dem Ausgangselement 12 und einem Abtriebselement 40 angeordnet und erstreckt sich in der Axialrichtung durch das Ausgangselement 12 und das Abtriebselement 40. Das Ausgangselement 12 ist über den Freilauf 20 zum Ausgeben von zumindest einem Teil des Abtriebsmoments in der Sperrdrehrichtung drehfest mit dem Abtriebselement 40, vorliegend ein Kettenrad, verbunden. Das Ausgangselement 12 und der Außenring 26 des Freilaufs 20 sind einstückig ausgebildet. Der Innenring 27 ist drehfest mit dem Abtriebselement 40 verbunden.

Das Eingangselement 11 ist an einer ersten Seite über zwei Lagereinrichtungen 44 drehbar relativ zu dem Abtriebselement 40 gelagert und über ein Dichtelement 43 zu einer Außenseite der Antriebsanordnung abgedichtet. Das Eingangselement 11 ist an einer der ersten Seite entgegengesetzten zweiten Seite über eine Lagereinrichtung 45 drehbar an einem Gehäuse der Antriebsanordnung gelagert und über ein Dichtelement 46 zu der Außenseite der Antriebsanordnung abgedichtet. Das Abtriebselement 40 ist über eine Lagereinrichtung 42 drehbar an dem Gehäuse gelagert und über ein Dichtelement 41 zu der Außenseite der Antriebsanordnung abgedichtet.

Das Gehäuse bildet ein Ölreservoir mit einer Öloberfläche als Ölspiegel, der als eine gestrichelte Linie dargestellt ist. Der Freilauf 20 ist so angeordnet, dass ein Abschnitt des Freilaufs 20 unterhalb der Öloberfläche angeordnet ist. Dadurch wird ein homogener Beölungszustand des Freilaufs 20 gewährleistet.

Figur 3 ist eine Schnittansicht einer Prinzipdarstellung einer weiteren Ausführungsform der Antriebsanordnung. Das Getriebe 10 weist einen ersten Planetenradsatz 15, einen zweiten Planetenradsatz 16, einen dritten Planetenradsatz 17 und einen vierten Planetenradsatz 18 auf. Das Getriebe 10 weist vier Schaltelemente und vier Freiläufe auf. Die Planetenradsätze 15, 16, 17, 18 sind über die Schaltelemente und Freiläufe so miteinander verschaltet, dass sie eine Mehrzahl an schaltbaren Übersetzungsverhältnissen bereitstellen. Das Ausgangselement 12 ist einstückig mit dem Hohlrad des vierten Planetenradsatzes 18 ausgestaltet. In einer Ausführungsform weist der vierte Planetenradsatz 18 ein zweites Ausgangselement auf, das als Sonnenrad des vierten Planetenradsatzes 18 ausgestaltet und drehfest mit dem Abtriebselement 40 verbunden ist. Das Getriebe 10 ist derart ausgeführt, dass in den unteren Gängen - zum Beispiel Gang 1 bis Gang 7 - der vierte Planetenradsatz 18 über den Freilauf 20 verblockt betreibbar ist, das heißt keine Differenzdrehzahl zwischen dem Hohlrad und dem Sonnenrad innerhalb der Planetenstufe vorherrscht. In diesen Gängen geht der größte Teil des Abtriebsmoments über das Ausgangselement 12 und somit über den in Sperrdrehrichtung verblockten Freilauf 20 zum drehfest angebundenen Abtriebselement 40. Das zum Abtriebselement 40 übertragbare Abtriebsmoment wird somit maßgeblich durch das übertragbare Drehmoment des Freilaufs 20 bestimmt.

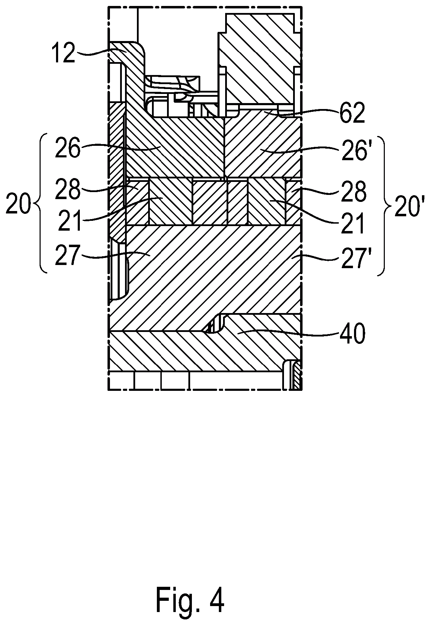

Figur 4 ist ein Detail einer Schnittansicht einer Prinzipdarstellung einer weiteren Ausführungsform der Antriebsanordnung. Die Antriebsanordnung weist eine nicht dargestellte elektrische Antriebseinheit 50 mit einem Reduktionsgetriebe 60 auf. Das Reduktionsgetriebe 60 ist zum Ausgeben eines elektrischen Abtriebsmoments über einen zweiten Freilauf 20' mit dem Abtriebselement 40 in einer Sperrdrehrichtung des zweiten Freilaufs 20' wirkverbindbar. Das Reduktionsgetriebe 60 weist ein Kettengetriebe auf. Ein Außenring 26' des zweiten Freilaufs 20' ist einstückig mit einem als Kettenrad ausgestalteten Ausgangselement 62 des Reduktionsgetriebes 60 ausgebildet. Der Innenring 27 und der Innenring 27' des zweiten Freilaufs 20' werden von einem gemeinsamen Innenring gebildet. Der gemeinsame Innenring weist auf einer ersten Seite einen Anbindungsabschnitt auf, der über eine Welle-Nabe-Verbindung drehfest mit dem Abtriebselement 40 verbunden ist. Der gemeinsame Innenring weist auf einer der ersten Seite entgegengesetzten zweiten Seite einen Abstützabschnitt auf, der zum Positionieren des gemeinsamen Innenrings relativ zu dem Abtriebselement 40 in der Radialrichtung ausgestaltet ist. Der Freilauf 20 und der zweite Freilauf 20' weisen ferner jeweils einen Käfig 28 zum Positionieren der jeweiligen Klemmkörper 21 in der Umfangsrichtung auf.

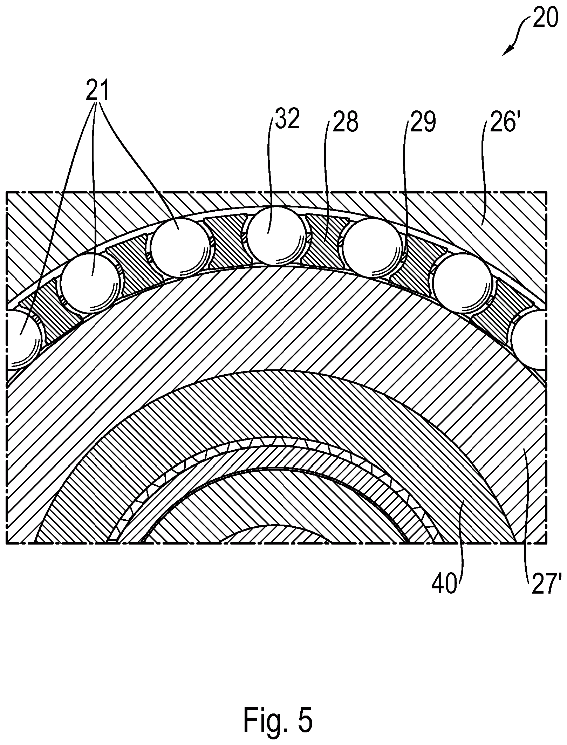

Figur 5 ist ein Detail einer Seitenansicht einer Prinzipdarstellung einer weiteren Ausführungsform der Antriebsanordnung. Der Freilauf 20 weist eine Anzahl an Wälzkörpern 32, vorliegend Zylinderrollen, auf und bildet dadurch eine Lagereinrichtung. Die Wälzkörper 32 sind in der Umfangsrichtung gleichmäßig verteilt angeordnet. Dabei sind ein Wälzkörper 32 und drei Klemmkörper 21 wechselweise in der Umfangsrichtung angeordnet. Die Innenumfangsfläche 24 des Außenrings 26 und die Außenumfangsfläche des Innenrings 27 bilden jeweils eine Lauffläche für die Wälzkörper 32.

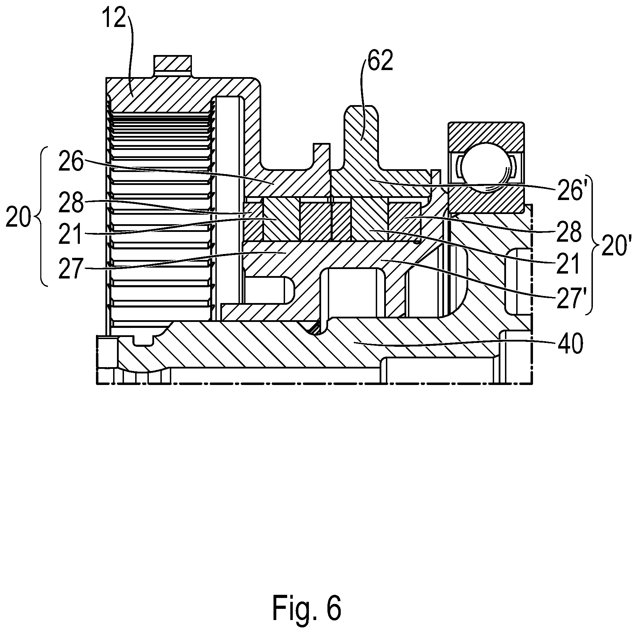

Figur 6 ist ein Detail einer Schnittansicht einer Prinzipdarstellung einer weiteren Ausführungsform der Antriebsanordnung. Die vorliegende Ausführungsform unterscheidet sich von der mit Bezug auf Figur 4 beschriebenen Ausführungsform, dadurch, dass der Außenring 26, 26' und der Innenring 27, 27' sowohl des Freilaufs 20 als auch des zweiten Freilaufs 20' eine radiale Elastizität aufweist, die an das von dem über den Freilauf 20, 20' übertragbare Sperrmoment angepasst ist. Dazu ist die Dicke des jeweiligen Außenrings 26, 26' und des jeweiligen Innenrings 27, 27' in der Radialrichtung verringert. Der Abstützabschnitt weist eine scheibenförmige Form auf und erstreckt sich von dem gemeinsamen Innenring in der Radialrichtung nach innen bis zu dem Abtriebselement 40. Der Anbindungsabschnitt ist über einen sich von dem gemeinsamen Innenring in der Radialrichtung nach innen erstreckenden Innenabschnitt mit dem gemeinsamen Innenring verbunden. Die radiale Elastizität ermöglicht eine homogene Deformation des jeweiligen Außenrings 26, 26' und des jeweiligen Innenrings 27, 27', wenn die jeweiligen Klemmkörper 21 in der Sperrstellung sind. Dadurch bleibt eine zylindrische Form von jeweiligen Laufflächen des jeweiligen Außenrings 26, 26' und des jeweiligen Innenrings 27, 27' bei der Deformation erhalten.

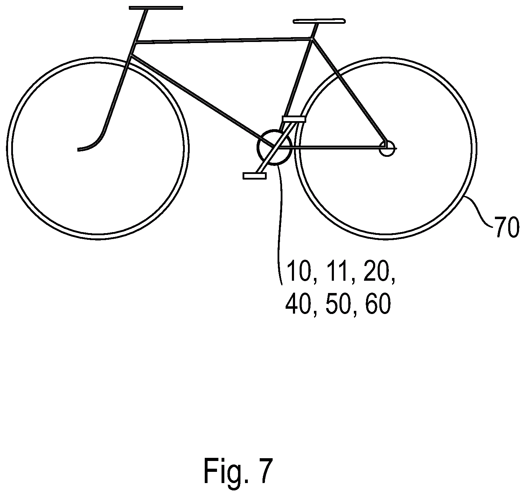

Figur 7 ist eine Seitenansicht einer Prinzipdarstellung des zumindest teilweise mit Muskelkraft antreibbaren Fahrzeugs, vorliegend eines E-Bikes. Die Antriebsanordnung ist als Tretlagerantriebsanordnung ausgestaltet. Das Eingangselement 11 des Getriebes 10 ist mechanisch über zwei Tretkurbeln, die jeweils ein Pedal aufweisen, mit einer mechanischen Antriebskraft antreibbar. Die elektrische Antriebseinheit 50 stellt eine elektrische Antriebskraft zum Fortbewegen des Fahrzeugs bereit. Das Abtriebselement 40 ist zum Ausgeben einer überlagerten Antriebskraft aus der elektrischen Antriebskraft und der mechanischen Antriebskraft mechanisch mit dem Getriebe 10 und dem Reduktionsgetriebe 60 wirkverbunden. Das Abtriebselement 40 ist zum Fortbewegen des Fahrzeugs mechanisch über einen Kettenantrieb mit einem als antreibbares Hinterrad ausgestalteten Traktionselement 70 wirkverbunden.

### Bezugszeichen

- 10: Getriebe
- 11: Eingangselement
- 12: Ausgangselement
- 15: Erster Planetenradsatz
- 16: Zweiter Planetenradsatz
- 17: Dritter Planetenradsatz
- 18: Vierter Planetenradsatz

- 20: Freilauf
- 20': Zweiter Freilauf
- 21: Klemmkörper
- 22: Klemmfläche
- 24: Innenumfangsfläche
- 25: Vorspannabschnitt
- 26: Außenring
- 26': Außenring des zweiten Freilaufs
- 27: Innenring
- 27': Innenring des zweiten Freilaufs
- 28: Käfig
- 29: Vorspannelement
- 30: Anschlagfläche
- 31: Freilauffläche
- 32: Wälzkörper

- 40: Abtriebselement
- 41: Dichtelement
- 42: Lagereinrichtung
- 43: Dichtelement
- 44: Lagereinrichtung
- 45: Lagereinrichtung
- 46: Dichtelement
- 50: elektrische Antriebseinheit

- 60: Reduktionsgetriebe
- 62: Ausgangselement des Reduktionsgetriebes

- 70: Traktionselement

## Patentansprüche

1. Antriebsanordnung für ein zumindest teilweise mit Muskelkraft antreibbares Fahrzeug, wobei die Antriebsanordnung aufweist:
ein Getriebe (10), das ein Übersetzungsverhältnis zwischen einem Eingangselement (11) und einem Ausgangselement (12) des Getriebes (10) bereitstellt,
ein Abtriebselement (40) und einen Freilauf (20), wobei das Abtriebselement (40) über den Freilauf (20) zum Ausgeben von zumindest einem Teil eines Abtriebsmoments mechanisch mit dem Ausgangselement (12) wirkverbindbar ist, und wobei
der Freilauf (20) mindestens einen schwenkbaren Klemmkörper (21) mit einer Klemmfläche (22) aufweist,
deren Krümmung an eine Krümmung einer Innenumfangsfläche (24) eines Außenrings (26) des Freilaufs (20) angepasst ist, und
wobei die Klemmfläche (22) ein Schwenken des Klemmkörpers (21) auf eine Sperrstellung beschränkt, in der die Klemmfläche (22) entlang der Innenumfangsfläche (24) ausgerichtet ist, und wobei der Klemmkörper (21)
zum Übertragen eines Sperrmoments ausgestaltet ist, wenn der Klemmkörper (21) in die Sperrstellung geschwenkt ist, und
zum Durchrutschen ausgestaltet ist, wenn das zu übertragende Abtriebsmoment größer als das Sperrmoment ist.

2. Antriebsanordnung nach Anspruch 1, **dadurch gekennzeichnet, dass**
der Klemmkörper (21) eine Aufstellweite in einer Radialrichtung zwischen dem Außenring (26) und einem Innenring (27) durch die Klemmfläche (22) beschränkt, wenn der Klemmkörper (21) in die Sperrstellung geschwenkt ist, und wobei
die Aufstellweite des Klemmkörpers (21) in der Sperrstellung größer als eine Aufstellweite des Klemmkörpers (21) in einer Freilaufstellung ist.

3. Antriebsanordnung nach einem der vorhergehenden Ansprüche, **dadurch gekennzeichnet, dass**
die Krümmung der Klemmfläche (22) für einen Flächenkontakt der Klemmfläche (22) mit der Innenumfangsfläche (24) in der Sperrstellung des Klemmkörpers (21) angepasst ist.

4. Antriebsanordnung nach einem der vorhergehenden Ansprüche, **dadurch gekennzeichnet, dass**
zumindest einer von dem Außenring (26) und dem Innenring (27) so ausgestaltet ist, dass er eine an das Sperrmoment angepasste radiale Elastizität aufweist.

5. Antriebsanordnung nach einem der vorhergehenden Ansprüche, **dadurch gekennzeichnet, dass**
der Freilauf (20) mindestens einen Wälzkörper (32) mit einer Lagerfunktion aufweist.

6. Antriebsanordnung nach einem der vorhergehenden Ansprüche, **dadurch gekennzeichnet, dass**
der Innenring (27) über eine Welle-Nabe-Verbindung drehfest mit dem Abtriebselement (40) verbunden ist.

7. Antriebsanordnung nach einem der vorhergehenden Ansprüche, **dadurch gekennzeichnet, dass**
das Getriebe (10) mindestens einen Planetenradsatz (15, 16, 17, 18) aufweist, wobei das Ausgangselement (12) als Hohlrad ausgestaltet ist, das einstückig mit dem Außenring (26) ausgebildet ist.

8. Antriebsanordnung nach einem der vorhergehenden Ansprüche, **dadurch gekennzeichnet, dass** die Antriebsanordnung
ein Ölreservoir mit einem Ölvolumen aufweist, das so ausgestaltet ist, dass zumindest ein Abschnitt des Freilaufs (20) unterhalb einer Öloberfläche des Ölvolumens angeordnet ist.

9. Antriebsanordnung nach einem der vorhergehenden Ansprüche, **dadurch gekennzeichnet, dass** die Antriebsanordnung
eine elektrische Antriebseinheit (50) mit einem Reduktionsgetriebe (60) aufweist, das zum Ausgeben eines elektrischen Abtriebsmoments über einen zweiten Freilauf (20') mechanisch mit dem Abtriebselement (40) wirkverbindbar ist, wobei
ein Ausgangselement (62) des Reduktionsgetriebes (60) und ein Außenring (26') des zweiten Freilaufs (20') einstückig ausgebildet sind,
der zweite Freilauf (20') in einer Axialrichtung benachbart zu dem Freilauf (20) angeordnet ist, und
der Innenring (27) und ein Innenring (27') des zweiten Freilaufs (20') von einem gemeinsam Innenring gebildet sind.

10. Fahrzeug, das zumindest teilweise mit Muskelkraft antreibbar ist, wobei das Fahrzeug aufweist:
eine Antriebsanordnung nach einem der vorhergehenden Ansprüche und ein Traktionselement (70), das zum Fortbewegen des Fahrzeugs mechanisch mit dem Abtriebselement (40) der Antriebsanordnung wirkverbunden ist.
